# EUROPEAN PATENT APPLICATION

(11) **EP 4 621 617 A1**
(43) Date of publication of application: **24.09.2025**
(21) Application number: 25161671.0
(22) Date of filing: 04.03.2025
(51) Int. Cl.: G06F 21/55, G06F 21/57

(54) **INFORMATION PROCESSING APPARATUS AND INFORMATION PROCESSING METHOD**

(30) Priority: 22.03.2024 JP 2024046765
(71) Applicant: CANON KABUSHIKI KAISHA, Tokyo 146-8501 (JP)
(72) Inventor: EGUCHI, Takami, Tokyo, 146-8501 (JP)
(74) Representative: Canon Europe Limited

(57) **Abstract**

An information processing apparatus collects a log of operations of a system or a program, and detects unauthorized access on the basis of the operation log and an attack scenario defined with a combination of functions which are not performed typically. When unauthorized access is detected, a function to be restricted is specified on the basis of the attack scenario used in the detection, and the specified function is restricted.

## Description

### BACKGROUND OF THE INVENTION

### Field of the Invention

The present invention relates to an information processing apparatus and a method of the information processing apparatus. In response to detection of unauthorized access to the information processing apparatus, a function, which is determined on the basis of an attack scenario used in the detection of unauthorized access, is prohibited from being used. Thus, damage from invasion using an unknown vulnerability is minimized.

### Description of the Related Art

Recently, damage from cyberattack targeting information processing apparatuses tends to increase. Accordingly, various security measures are taken. However, more sophisticated cyberattack makes it difficult to take measures against such attacks by using security measures of the related art, such as malware detection and a firewall. In particular, defense against attack called zero-day attack which uses an unknown vulnerability is difficult. For example, attackers who have invaded the systems of information processing apparatuses by using zero-day attack and maliciously use the systems to damage persons and companies have been observed. Against such sophisticated attack, security measures, in which, in addition to defense at network boundaries which is a technique of the related art, behavior of a system is monitored to detect attacks aiming at malicious use of the system, are widely used. Such security measures are implemented by using endpoint detection and response (EDR) which is a known technique, and widely used in personal computers (PCs). When behavior of an attacker is detected by using EDR, a terminal which is a target of the attack is typically isolated from the network to protect resources, such as the other terminals and servers.

Japanese Patent No. 6968722 describes the following technique: an incident which occurs in a vehicle is detected; an attack scenario database is referred to; and a function having a vulnerability related to the detected incident is stopped.

If an incident is detected even after all specified vulnerabilities are stopped, it is determined that an unknown vulnerability is present, and a function is degraded.

However, the technique disclosed in Japanese Patent No. 6968722 mainly aims at taking measures against known vulnerabilities. Therefore, in terms of functional degradation against attack, whose cause is not identifiable and which is based on an unknown vulnerability, since it is not possible to specify a function to be stopped, the technique does not describe such functional degradation in detail. Therefore, it is not possible to stop functions on the assumption of attacks after invasion using an unknown vulnerability. In addition, the measures such as EDR are widely used, for example, in personal computers (PCs). However, use of such measures needs a certain amount of resources, and is not practical to be introduced to Internet of Things (IoT) devices having limitation in resources.

### SUMMARY OF THE INVENTION

The present invention provides a technique for, in response to detection of unauthorized access to an information processing apparatus using an unknown vulnerability, preventing subsequent unauthorized access by introducing appropriate functional restriction.

The present invention in its first aspect provides an information processing apparatus as specified in claims 1 to 9.

The present invention in its second aspect provides an information processing method as specified in claim 10.

The present invention in its third aspect provides a program as specified in claim 11.

Further features of the present invention will become apparent from the following description of example embodiments with reference to the attached drawings.

### BRIEF DESCRIPTION OF THE DRAWINGS

Fig. 1 is a block diagram illustrating the connection configuration of a multi-functional peripheral (MFP) and a peripheral device which are related to the present invention.
Fig. 2 is a diagram illustrating the internal configuration of a controller unit of an MFP related to the present invention.
Fig. 3 is a diagram illustrating the block configuration of software executed in a controller of an MFP related to the present invention.
Fig. 4 is a diagram illustrating attack scenarios according to a first embodiment.
Fig. 5 is a flowchart for execution of a process according to the first embodiment.
Fig. 6 is a diagram illustrating attack scenarios according to first and second modified examples of the first embodiment.

### DESCRIPTION OF THE EMBODIMENTS

An information processing apparatus according to an embodiment of the present invention will be described below in detail by referring to the drawings. In the present embodiment, the following process is described: in response to detection of unauthorized access to an information processing apparatus, only a function which was used by an attacker is restricted; expansion of the damage is thus hindered while functions of the information processing apparatus are maintained. In the present embodiment, a multi-functional peripheral (MFP), which is an image forming apparatus incorporating image forming functions of multiple apparatus (such as two or more of a printer, scanner, copier, etc), will be described as an example of an information processing apparatus. However, the present invention provides a technique applicable to an information processing apparatus other than an MFP.

### First Embodiment

### The Apparatus Configuration according to the First Embodiment

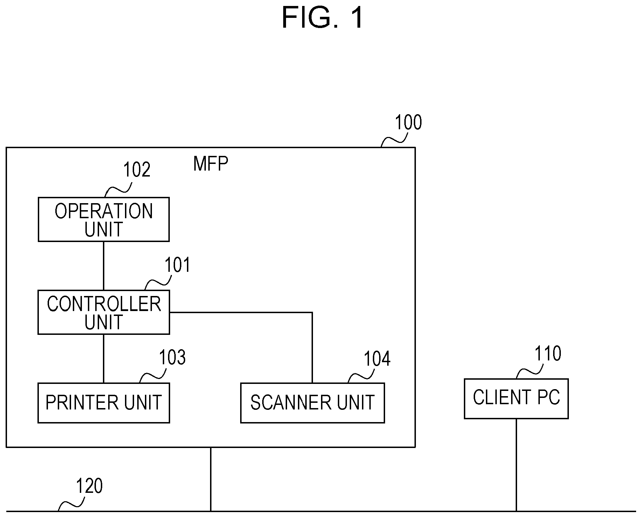

The connection configuration of an MFP and a peripheral device which are related to the present invention will be described by using the block diagram in Fig. 1.

An MFP 100 is connected to a client PC 110 through a local-area network (LAN) 120.

The MFP 100 has an operation unit 102 which performs input/output from/to a user. A printer unit 103 outputs electronic data onto a paper medium. A scanner unit 104 reads a paper medium for conversion to electronic data. The operation unit 102, the printer unit 103, and the scanner unit 104 are connected to a controller unit 101 so that functions as an MFP are implemented under control of the controller unit 101.

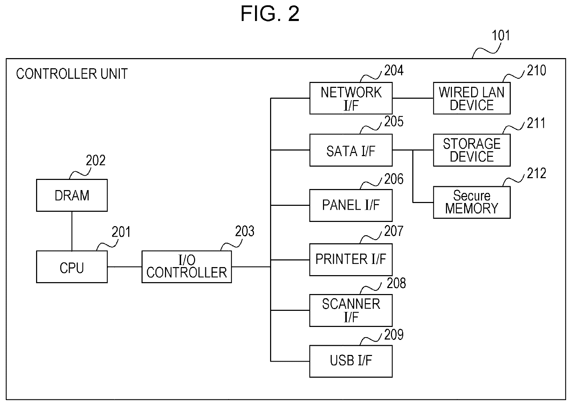

Fig. 2 is a block diagram illustrating the physical configuration of the controller unit 101 of the MFP 100.

A central processing unit (CPU) 201 performs main arithmetic processes in the controller unit. The CPU 201 is connected to a dynamic random access memory (DRAM) 202 through a bus. The DRAM 202 is used by the CPU 201 as a work memory for temporarily storing, in computation performed by the CPU 201, program data, which describes arithmetic instructions, and data that is to be processed. The CPU 201 is connected to an input/output (I/O) controller 203 through a bus. The I/O controller 203 performs input/output to/from various devices according to instructions from the CPU 201. The I/O controller 203 is connected to a network interface (I/F) 204, and is connected to a wired LAN device 210 through the network I/F 204. The CPU 201 controls the wired LAN device 210 through the network I/F 204 to implement communication over the LAN 120. The I/O controller 203 is connected to a serial advanced technology attachment (SATA) I/F 205, and is connected to a storage device 211 and a Secure memory 212 through the SATA I/F 205. The CPU 201 uses the storage device 211 to permanently store document files and programs for implementing the functions of the MFP. The CPU 201 uses the Secure memory 212 to store security-sensitive data. The Secure memory 212 is encrypted and uses access control to be accessed only from specific modules. Therefore, the Secure memory 212 is protected from leak and unauthorized rewriting of confidential information. A panel I/F 206, which is connected to the I/O controller 203, converts physical user operations, which are input to the operation unit 102, to electronic data which is transmitted to the CPU 201, and thus implements the user operations. A printer I/F 207 is connected to the I/O controller 203. The CPU 201 uses the printer unit 103 through the printer I/F 207 to implement an output process onto a paper medium. A scanner I/F 208 is connected to the I/O controller 203. The CPU 201 uses the scanner unit 104 through the scanner I/F 208 to implement a process of reading a document. A Universal Serial Bus (USB) I/F 209, which is connected to the I/O controller 203, controls any devices connected to the USB I/F 209.

In execution of a copying function, the CPU 201 reads program data from the storage device 211 onto the DRAM 202 through the SATA I/F 205. According to the program data read onto the DRAM 202, the CPU 201 detects a copy instruction from a user on the operation unit 102 through the panel I/F 206. In response to detection of the copy instruction, the CPU 201 receives a document, as electronic data, from the scanner unit 104 through the scanner I/F 208 for storage onto the DRAM 202. The CPU 201 performs, for example, a color conversion process, which is suitable for output, on the image data stored in the DRAM 202. The CPU 201 transfers the image data, which has been stored in the DRAM 202, to the printer unit 103 through the printer I/F 207 to perform an output process onto a paper medium. As described above, the copying function may be implemented by combining a print function with a scan function.

In execution of PDL printing, the client PC 110 transmits a print instruction through the LAN 120. The CPU 201 reads program data from the storage device 211 onto the DRAM 202 through the SATA I/F 205. According to the program data read onto the DRAM 202, the CPU 201 detects the print instruction through the network I/F 204. In response to detection of the PDL transmission instruction, the CPU 201 receives print data through the network I/F 204, and stores the print data in the storage device 211 through the SATA I/F 205. In response to completion of storage of the print data, the CPU 201 loads the print data, which has been stored in the storage device 211, as image data onto the DRAM 202. The CPU 201 performs, for example, a color conversion process, which is suitable for output, on the image data stored in the DRAM 202. The CPU 201 transfers the image data, which is stored in the DRAM 202, to the printer unit 103 through the printer I/F 207 for execution of an output process on a paper medium.

The functional configuration and the process flow according to the present embodiment will be described below.

### The Functional Configuration of the First Embodiment

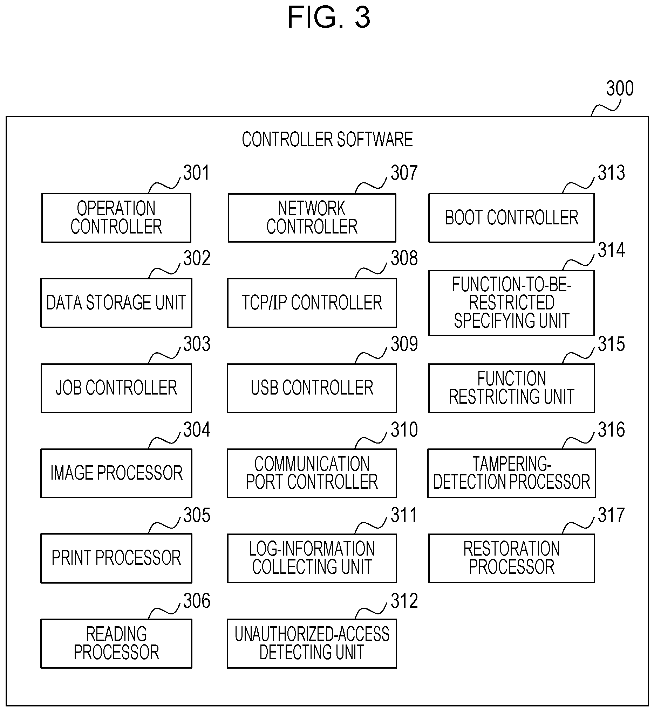

By using the block diagram in Fig. 3, a functional configuration example implemented through software executed in the controller unit 101 of the MFP 100 of the first embodiment will be described.

An operation controller 301 displays a screen image for users on the operation unit 102, detects users' touch operations, and performs processes associated with screen components such as buttons displayed on the screen.

A data storage unit 302 stores/reads data in/from the storage device 211 in response to requests from other controllers. For example, when a user wants to change some device setting, the operation controller 301 detects information which has been input by the user on the operation unit 102, and the data storage unit 302 stores the information as a set value in the storage device 211 in response to a request from the operation controller 301.

A job controller 303 controls job execution according to instructions from other controllers.

An image processor 304 processes image data into a format suitable for its usage according to an instruction from the job controller 303.

A print processor 305 prints an image onto a paper medium for output through the printer I/F 207 according to an instruction from the job controller 303.

A reading processor 306 reads a document, which has been set, through the scanner I/F 208 according to an instruction from the job controller 303.

A network controller 307 performs network setting such as an Internet Protocol (IP) address on a transmission control protocol/internet protocol (TCP/IP) controller 308 according to set values, which are stored in the data storage unit 302, in response to system startup or detection of change of settings.

The TCP/IP controller 308 receives/transmits network packets through the network I/F 204 according to instructions from other controllers.

A USB controller 309 controls the USB I/F 209 for control of any USB-connected devices.

A communication port controller 310 controls ports used when the TCP/IP controller 308 receives/transmits packets.

A log-information collecting unit 311 collects, as log data, various types of behavior of the MFP to detect unauthorized access, and records the log data in the storage device 211. For example, the log-information collecting unit 311 (which may also be referred to herein as a log collecting means) collects log data which corresponds to a log of events or operations of a system and/or a program in the MFP (e.g. which have been collected over time and use of the MFP). Examples of typical log data include an event log, a system log, a network log, and a security log. Their concrete examples will be described below.

An event log includes data, which is related to events of the MFP, such as, "start/stop of the MFP and their times", "login/logout time of user/manager", "start/stop of program or service and their times", and so on. In addition, an event log includes "user operation (description about the operation, the time of the operation) such as printing, scanning, or copying" and "operation (description about the operation, the time of the operation) on system set values, for example, account information such as password, time, access control list, network, and certificate".

A system log includes data, which is related to the MFP system, such as, "kernel message/debug information", "error/warning of the disk file system", "hardware event such as temperature or power supply state", and so on. In addition, a system log includes "CPU usage rate, the memory usage, the storage usage", "network traffic/band", and "response time of application".

A network log includes data, which is related to the network of the MFP, such as, "transmission/reception destination address (IP address)", "transmission/reception time", "transmission/reception interval", "transmission/reception data size", and "transmission/reception data payload".

A security log includes data, which is related to security of the MFP, that is, "failure of login attempt", "lock/unlock of account", "permission/rejection of access control of manager function/file/directory (box)", "firewall control and rejection", and so on.

These types of log data may be collected by using a system log service (for example, syslog) or audit daemon (for example, Auditd).

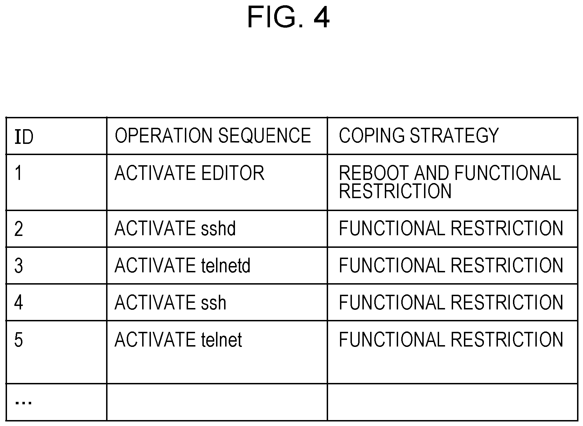

An unauthorized-access detecting unit 312 (which may also be referred to as an unauthorized-access detecting means) detects unauthorized access to the MFP. An attacker may use, for example, an unknown vulnerability of the MFP to perform unauthorized access to the MFP. In unauthorized access, an attacker uses the shell of the MFP to execute various commands and perform unauthorized use of functions. Therefore, when a behavior, which is not typically performed by the MFP, occurs, the unauthorized-access detecting unit 312 detects the behavior as unauthorized access. For example, an attacker makes an attack by tampering with programs and set values of the MFP. To do this, the attacker makes attacks, such as activation of an editor by using the shell of the MFP or execution of a search command for finding a program which is the target of the attacker. Commands for performing such processes are installed in the MFP, but are not performed in normal use cases. When the unauthorized-access detecting unit 312 detects typical behavior of an attacker, which does not occur in use cases of the MFP, the unauthorized-access detecting unit 312 may determine that unauthorized access occurs. The detection is performed on the basis of the log data, which is collected by the log-information collecting unit 311, and one or more attack scenarios, such as one or more of the attack scenarios illustrated in Fig. 4. In an attack scenario, an operation sequence, which is not performed typically by the MFP, and its coping strategy are defined. For example, an attack scenario may be defined by a combination or a sequence of one or more operations or functions which are not performed by the MFP in normal use cases or during normal use/operation of the MPF (e.g. are not typically performed by the MFP). The attack scenarios are stored in the storage device 211, and are read, for use, from the storage device 211. For example, one or more attack scenarios may be predefined and stored in the storage device 211. In an example, for each attack scenario an action to be performed following detection of the attached scenario (e.g. coping strategy) may also be defined.

The example of detection of unauthorized access based on commands which are not performed in use cases of the MFP is described. Other than this, the detection may be made from process behavior different from typical behavior or system behavior such as loading a library, or behavior different from typical behavior may be detected by using artificial intelligence (AI). In response to detection of unauthorized access, the unauthorized-access detecting unit 312 may instruct a boot controller 313 to perform rebooting control.

The boot controller 313 controls boot/reboot of the MFP. The boot controller 313 determines whether the MFP is to be rebooted according to the coping strategy described in an attack scenario, and reboots the MFP. When, for example, unintended change of a configuration file occurs, reboot is an effective coping strategy. Reboot involves restoration performed by a restoration processor 317. This may cause the initial state to be restored.

In consideration of the case in which, in invasion, a program for attack is not installed in the storage device 211 and resides in the DRAM 202, which causes a trace of the invasion to remain only in the DRAM 202, only functional restriction may be made as a coping strategy. In this case, reboot is not performed.

A function-to-be-restricted specifying unit 314 (which may also be referred to as a function-to-be-restricted specifying means) specifies a function that is to be restricted, on the basis of the attack scenario and the log data which were used by the unauthorized-access detecting unit 312. Specifically, among the functions defined in the operation sequences of the attack scenarios, the function used in detection of unauthorized access is set to a function that is to be restricted.

A function restricting unit 315 (which may also be referred to as a function restricting means) restricts the function specified by the function-to-be-restricted specifying unit 314. Specifically, activation of the module is monitored and stopped.

A tampering-detection processor 316 (which may also be referred to as a tampering-detection means) detects tampering with the settings or programs of the MFP. In detection of tampering, a hash value calculated from a tampering-detection target is used. Hash values calculated from the settings or programs are recorded as correct values in the Secure memory 212 of the MFP. The tampering-detection processor 316 verifies whether tampering has been made from whether the hash value calculated from the tampering-detection target matches the correct value. When the result of the tampering-detection process indicates no tampering, the not-tampered module is activated. When tampering has been made, the tampering-detection processor 316 instructs the restoration processor 317 to perform restoration.

The restoration processor 317 restores settings or programs in which tampering has been detected by the tampering-detection processor 316. The restoration process is implemented by overwriting the tampered points with the normal-state settings or programs (golden copies) stored in advance in the Secure memory 212 and the storage device 211 of the MFP. For example, when tampering is detected settings and/or programs of the MFP may be restored from one or more settings and/or programs (e.g. normal-state or predefined settings and/or programs, which may also be referred to as golden copies) stored previously in the MFP.

### The Process Flow of the First Embodiment

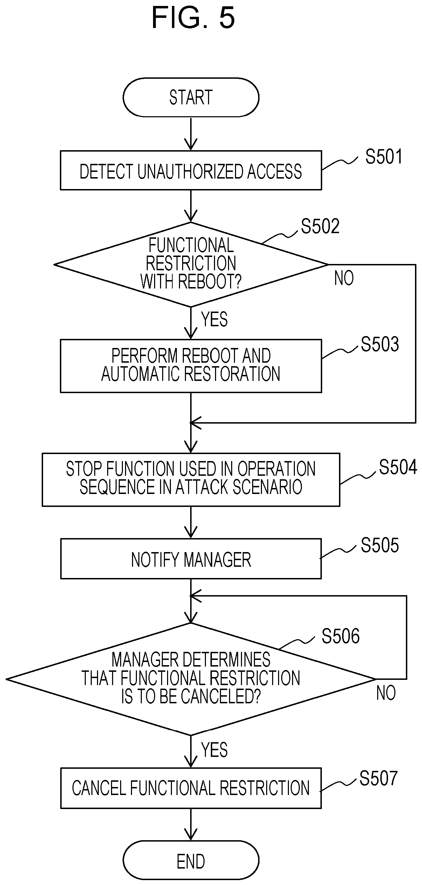

By using the flowchart in Fig. 5, the flow of restricting and taking measures against a function maliciously used by an attacker when unauthorized access is detected in the present embodiment example will be described.

The unauthorized-access detecting unit 312 detects unauthorized access to the MFP on the basis of the log data, which is collected by the log-information collecting unit 311 and is stored in the storage device 211, and the attack scenarios (S501). If it is found, from the log data, that a function corresponding to the operation sequence described in an attack scenario is activated, it is determined that unauthorized access occurs. Then, the boot controller 313 determines whether the MFP is to be rebooted (S502). If, in the attack scenarios, the coping strategy corresponding to the detected operation sequence is "reboot and functional restriction", the determination result is Yes, and the process proceeds to step S503. If the coping strategy is "functional restriction", the determination result is No, and the process proceeds to step S504. In step S503, the boot controller 313 performs reboot. If the tampering-detection processor 316 detects tampering with a file, the restoration processor 317 restores the file. In step S504, the function-to-be-restricted specifying unit 314 stops the function, based on which unauthorized access has been detected in step S501, in the operation sequence described in the attack scenario. Then, a manager is notified of stop of the function (S505). The notification method may be e-mail transmission to an e-mail address of the manager which is registered in advance, or display on the operation unit 102. After removal of fundamental causes of the unauthorized access, such as specifying and blocking the invasion path to the network, is performed, if the manager determines that the functional restriction is to be canceled (Yes in S506), the functional restriction is canceled (S507). If the functional restriction is not to be canceled (No in S506), the process proceeds to S506, and the state of waiting cancellation of the functional restriction from the manager continues.

### A First Modified Example of the First Embodiment

In the first embodiment, an operation sequence function, which is not executed in normal use cases and which is described in an attack scenario, is specified as a function that is to be restricted, and is stopped. In a first modified example, the operation sequence of an attack scenario indicates a series of operations whose functions are to be stopped step by step in accordance with the number of received attacks. Thus, while the function of the MFP is maintained as much as possible, functions are stopped step by step in accordance with the number of received attacks. To do this, the Secure memory 212 includes a detection counter for recording the number of detections, for each attack scenario.

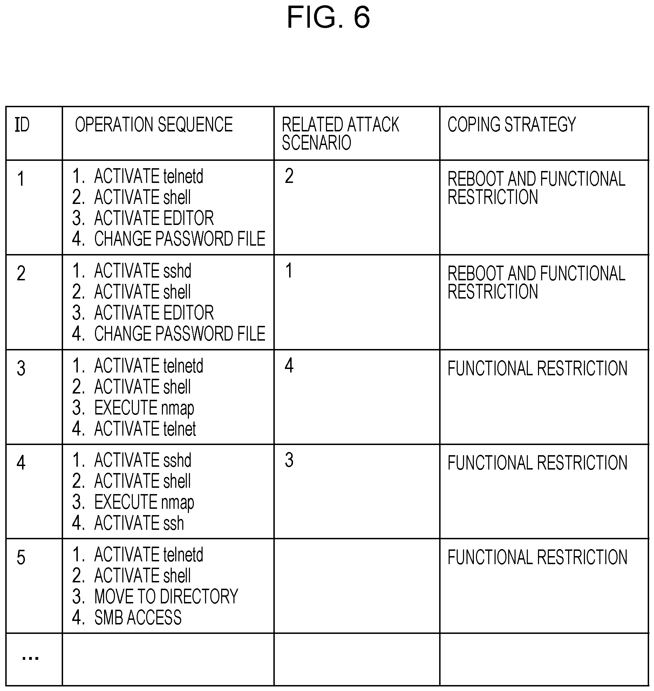

Fig. 6 illustrates attack scenarios of the present modified example. There are two different points from the attack scenarios in Fig. 4. The first point is that an operation sequence is a series of operations, not a single operation. Although a series of four operations or functions are shown in Fig. 6 for each attack scenario, this is by way of example only. Each attack scenario may include a plurality of operations or functions. The second point is that association of a related attack scenario may be identified. A related attack scenario is used in a second modified example.

By using the flowchart in Fig. 5, the flow of the first modified example will be described. Steps other than S501 of detecting unauthorized access and S504 of stopping a function are substantially the same as those in the first embodiment, and will not be described.

In S501, when operations, the number of which is equal to the number of steps which is obtained by subtracting the value of the detection counter from the number of steps of each attack scenario in Fig. 6, are detected, it is determined that unauthorized access occurs. That is, when the detection counter is set to zero, if the first to fourth operations in the operation sequence appear in the log data, it is determined that unauthorized access occurs. When the detection counter is set to one, if the first to third operations in the operation sequence appear in the log data, it is determined that unauthorized access occurs. When unauthorized access is detected, the value of the detection counter of the corresponding attack scenario is incremented. When unauthorized access is detected in multiple attack scenarios, it is determined that unauthorized access is received in an attack scenario whose detection counter has a larger number than the others, and the value of the corresponding detection counter is incremented. When the values of the detection counters are the same, it is determined that unauthorized access is received in an attack scenario whose detection counter has a value incremented later.

In S504, the attack scenario is referred to, and which function is to be stopped is determined in accordance with the number of detections. For example, when unauthorized access is detected in Attack scenario 4, if the value of the detection counter is one, "4. activate ssh" is prohibited. If the value of the detection counter is two, "4. activate ssh" has been already stopped, and the first to third operations in the operation sequence have been detected, "3. execute nmap" is prohibited. The same is true for the other cases. In more general terms, the function restricting unit (315), based on the count of the counter, may restrict functions step by step starting from the latest (or last) function among the functions of the attack scenario (e.g. starting at function 4, then going to function 3, ... etc.).

The first modified example is described above. Thus, while the function of the MFP is maintained as much as possible, functional degradation may be performed step by step in accordance with the number of received attacks.

### The Second Modified Example of the First Embodiment

In the second modified example, in stopping functions, to prevent a similar attack, the relationship between attack scenarios is used to also prohibit use of functions related to the other attack scenario by using, as the start point, a common function obtained by going back through the sequence of functions of the different attack scenarios. A related attack scenario is related to another attack scenario when the related attack scenario has similar functions to the another attack scenario: for example, when the related attack scenario has at least one function that is the same as a function in the another attack scenario (i.e. a common function). The related attack scenario in each attack scenario in Fig. 6 describes (or is identified by) the ID of an attack scenario related to the attack scenario.

By using the flowchart in Fig. 5, the flow of the second modified example will be described. The steps other than S504 of stopping a function are substantially the same as those of the first embodiment, and will not be described.

In S504, not only the operation sequence of the attack scenario ID for the unauthorized access detected in S501, but also a function in the operation sequence of the related attack scenario, is stopped.

For example, when unauthorized access is detected in Attack scenario 4, "4. activate ssh" is prohibited. In addition, "4. activate telnet" in Attack scenario 3, in which the same operations are listed until the nmap operation, is prohibited.

Like the first modified example, detection counters may be provided to stop functions step by step in accordance with the number of detections.

### Other Embodiments

Embodiments of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to example embodiments, it is to be understood that the invention is not limited to the disclosed example embodiments. The invention is defined by the following claims.

## Claims

1. An information processing apparatus comprising:
log collecting means (311) configured to collect a log of operations of a system or a program in the information processing apparatus;
unauthorized-access detecting means (312) configured to detect unauthorized access on a basis of the operation log and an attack scenario, the operation log being collected by the log collecting means (311), the attack scenario being defined with a combination of operations which are not performed typically by the information processing apparatus;
function-to-be-restricted specifying means (314) configured to specify a function that is to be restricted, on a basis of the attack scenario used in detection of the unauthorized access; and
function restricting means (315) configured to restrict the function specified by the function-to-be-restricted specifying means (314).

2. The information processing apparatus according to Claim 1, wherein the information processing apparatus is configured to provide:
an image formation function.

3. The information processing apparatus according to Claim 1 or Claim 2,
wherein, when the function-to-be-restricted specifying means (314) determines that reboot is to be performed, the information processing apparatus is configured to be rebooted.

4. The information processing apparatus according to any one of Claims 1 to 3,
wherein, when the function-to-be-restricted specifying means (314) determines that reboot is to be performed, the information processing apparatus is configured to be rebooted, and
wherein the information processing apparatus further includes tampering-detection means (316) for detecting tampering with the information processing apparatus, and, when tampering is detected, the information processing apparatus is configured to perform restoration from a golden copy stored in advance.

5. The information processing apparatus according to Claim 1 or Claim 2,
wherein, when the function is restricted, the function restricting means (315) is configured to notify a manager, and cancel the restriction in response to an operation of the manager.

6. The information processing apparatus according to Claim 1 or Claim 2,
wherein the attack scenario is defined with a plurality of functions which are not performed typically by the information processing apparatus, and
wherein, in accordance with a count of detections of unauthorized access, the function restricting means (315) is configured to restrict functions step by step starting from a latest function among the functions of the attack scenario.

7. The information processing apparatus according to Claim 6,
wherein, when a different function among the plurality of functions included in the attack scenario is detected, the different function being different from the function which has been restricted, the unauthorized-access detecting means (312) is configured to determine that unauthorized access occurs.

8. The information processing apparatus according to Claim 6,
wherein, when activation of a function corresponding to a plurality of attack scenarios is detected, the unauthorized-access detecting means (312) is configured to determine that unauthorized access corresponding to the attack scenario having the most count of unauthorized access occurs.

9. The information processing apparatus according to Claim 1 or Claim 2,
wherein the attack scenario is defined with execution of a plurality of functions which are not performed typically by the information processing apparatus, and an attack scenario defined with similar execution of functions is used as a related attack scenario, and
wherein the function restricting means (315) is configured to also restrict a function of the related attack scenario.

10. An information processing method of an information processing apparatus, the method comprising:
collecting a log of operations of a system or a program in the information processing apparatus;
detecting unauthorized access on a basis of the collected operation log and an attack scenario defined with a combination of operations which are not performed typically by the information processing apparatus;
specifying a function that is to be restricted, on a basis of the attack scenario used in detection of the unauthorized access; and
restricting the specified function.

11. A program comprising instructions which, when the program is executed by a computer, causes the computer to execute a process for an information processing apparatus, the process comprising:
collecting a log of operations of a system or a program in the information processing apparatus;
detecting unauthorized access on a basis of the collected operation log and an attack scenario defined with a combination of operations which are not performed typically by the information processing apparatus;
specifying a function that is to be restricted, on a basis of the attack scenario used in detection of the unauthorized access; and
restricting the specified function.
